# EUROPÄISCHE PATENTSCHRIFT

(11) **EP 4 331 917 B1**
(45) Veröffentlichungstag und Bekanntmachung des Hinweises auf die Patenterteilung: **20.05.2026**
(21) Anmeldenummer: 23189428.8
(22) Anmeldetag: 03.08.2023
(51) Int. Cl.: B60R 16/02, H02G 3/32

(54) **FIXIERUNG EINER HOCHVOLTDOPPELSCHIENE**
FIXING OF A HIGH-VOLTAGE DOUBLE RAIL
FIXATION D'UNE DOUBLE BARRE HAUTE TENSION

(30) Priorität: 02.09.2022 DE 102022122262
(43) Veröffentlichungstag der Anmeldung: 06.03.2024
(73) Patentinhaber: Lisa Dräxlmaier GmbH, 84137 Vilsbiburg (DE)
(72) Erfinder: Neumayer, Franziska, 84144 Geisenhausen (DE); Wimmer, Stefan, 84098 Hohenthann (DE); Saller, Robert, 84546 Egglkofen (DE); Komar, Florian, 84149 Velden (DE); Eggl, Simon, 84098 Hohenthann (DE)

(56) Entgegenhaltungen:
- DE-A1- 102017 116 445
- JP-A- 2005 160 273
- US-A1- 2019 126 864

## Beschreibung

### Technisches Gebiet

Die vorliegende Erfindung betrifft eine Vorrichtung zum Befestigen einer Doppelschiene an einem Fahrzeug. Zudem betrifft die Erfindung ein Verfahren zum Befestigen einer Doppelschiene an einem Fahrzeug.

### Stand der Technik

Zur Übertragung elektrischer Energie werden neben klassischen Rundleiter- und Einschienensystemen im Bereich der E-Mobilität mittlerweile verstärkt auch Doppelschienensysteme eingesetzt, da sie durch Feldauslöschung Vorteile bezüglich geringerer elektromagnetischer Feldabstrahlung aufweisen. Die im Verlegeweg der Schiene aufkommenden Kräfte der Längenausdehnung und Vibrationen vom Fahrzeug wirken sich direkt auf die an die Schiene angeschlossenen Komponenten aus. Es ist zwingend erforderlich, die Kräfte von den Kontaktbereichen fernzuhalten und gleichzeitig die Doppelschiene in der Karosserie zu fixieren. Die Fixierung der Schiene muss sowohl die Schiene im Bauraum an der Karosserie halten, als auch direkt an den Schnittstellen zu den Komponenten wie Ladedosen, Schaltboxen oder Batterien positioniert werden. Im Stand der Technik wird die Fixierung der Schiene aktuell durch Kunststoffbauteile mit entsprechenden Feder-Geometrien realisiert. Diese können den aufkommenden Kräfte einer Aluminiumschiene im Allgemeinen nicht standhalten. Die derzeit bekannten Lösungen halten somit lediglich die Doppelschiene im Bauraum, fangen aber nicht die auftretenden Kräfte, Eigenschwingungen und Vibrationen ab. Vor allem die angeschlossenen Schnittstellen an der Doppelschiene müssen kräftefrei sei, da die übertragenen Kräfte sonst auf die weiteren Komponenten, wie Ladedose, Schaltbox oder Batterie, übergehen können. Es besteht daher der Bedarf nach einer verbesserten Vorrichtung zum Befestigen einer Doppelschiene an einem Fahrzeug. Für eine spezielle Ausgestaltung einer Doppelschiene offenbart die JP 2005-160273 A eine Befestigungsvorrichtung, die ein elastisches Kissen und eine Befestigungsschelle zur Befestigung an einem Fahrzeug umfasst. Weiterer Stand der Technik ist in der DE 102017116445 A1 und der US 2019/126864 A1 zu finden.

### Beschreibung der Erfindung

Eine Aufgabe der Erfindung ist es daher, eine verbesserte Vorrichtung zum Befestigen einer Doppelschiene an einem Fahrzeug bereitzustellen, die einfach zu montieren ist und die Kräfte und Vibrationen der Doppelschiene aufnehmen kann, um Schnittstellen kräftefrei zu halten.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die beschriebenen Ausführungsformen gelten gleichermaßen für Vorrichtung zum Befestigen einer Doppelschiene an einem Fahrzeug sowie Verfahren zum Befestigen einer Doppelschiene an einem Fahrzeug.

Weiterhin soll darauf hingewiesen werden, dass alle ein Verfahren betreffende Ausführungsformen der vorliegenden Erfindung in der beschriebenen Reihenfolge der Schritte ausgeführt werden können. Trotzdem muss das nicht die einzigmögliche und erforderliche Reihenfolge der Schritte des Verfahrens sein. Die hierin beschriebenen Verfahren können in einer anderen Reihenfolge der offenbarten Schritte ausgeführt werden, ohne von der entsprechenden Ausführungsform des Verfahrens abzuweichen, sofern nicht nachfolgend ausdrücklich das Gegenteil erwähnt wird.

Gemäß einem Aspekt der Erfindung wird eine Vorrichtung zum Befestigen einer Doppelschiene an einem Fahrzeug nach Anspruch 1 vorgeschlagen. Die Vorrichtung weist ein elastisches Kissen und eine Befestigungsschelle auf. Das elastische Kissen weist eine erste Aussparung auf, die ausgeführt ist, eine erste Schiene der Doppelschiene aufzunehmen, und eine zweite Aussparung, die ausgeführt ist, eine zweite Schiene der Doppelschiene aufzunehmen. Das elastische Kissen weist wenigstens einen Schlitz auf, der ausgeführt ist, ein seitliches Einführen der ersten Schiene der Doppelschiene in die erste Aussparung und ein seitliches Einführen der zweiten Schiene der Doppelschiene in die zweite Aussparung zu ermöglichen. Die Befestigungsschelle weist eine Einbuchtung auf, die ausgeführt ist, das elastische Kissen aufzunehmen, und einen Befestigungsmechanismus, der ausgeführt ist, die Befestigungsschelle an einem Fahrzeug zu befestigen. Weiterhin weist die Vorrichtung einen Fixierungsmechanismus auf, der ausgeführt ist, die Befestigungsschelle am elastischen Kissen zu fixieren.

Demnach weist die Vorrichtung zur Befestigung zwei Komponenten auf, welche zusammenfassend die Doppelschiene, beispielsweise eine Hochvolt-Doppelschiene, umschließen. Die innere Komponente, das elastische Kissen, welches vorzugsweise aus Silikon gefertigt sein kann, ist an wenigstens einer Seite geschlitzt, um die Schienen einzeln in die dafür vorgesehenen Aussparungen einstecken und im voneinander getrennt im elastischen Kissen aufnehmen zu können. Das Einstecken der Schienen kann durch den Schlitz im elastischen Kissen nicht nur in Längsrichtung der Schiene erfolgen, sondern auch quer zur Schiene. Die äußere Komponente, die Befestigungsschelle, kann nachdem das elastische Kissen auf den Schienen angebracht ist, über dem elastischen Kissen positioniert und vorfixiert werden. Dazu weist die Befestigungsschelle eine Einbuchtung auf, in welcher das elastische Kissen aufgenommen werden kann. Ein Fixierungsmechanismus an dem elastischen Kissen und/oder an der Befestigungsschelle erlaubt das vorfixieren von sowohl elastischem Kissen und Befestigungsschelle aneinander als auch der gesamten Vorrichtung auf der Doppelschiene. Dieses Vorfixieren kann insbesondere die Befestigungsschelle und die Vorrichtung auf der Doppelschiene in Position halten, solange die Vorrichtung noch nicht mittels des Befestigungsmechanismus fest mit einem Fahrzeug verbunden worden ist. Die Befestigungsschelle kann somit als Anschraubpunkt dienen, während das elastische Kissen die die Schienen umfasst und von der Befestigungsschelle gehalten wird. An der Befestigungsschelle können Langlöcher als Befestigungsmechanismus zur Verschraubung der Schelle im Bauraum des Fahrzeugs vorgesehen sein. Die Vorrichtung kann somit an jeglichen Positionen im Fahrzeugbauraum angebracht und verschraubt werden.

Durch das Befestigen bzw. Anschrauben der Vorrichtung im Bauraum des Fahrzeugs kann die darin enthaltene Doppelschiene verpresst und fixiert werden. Die Befestigung kann die auftretenden Kräfte, Schwingungen und Vibrationen aufnehmen und sie somit von den Schnittstellen fernhalten. Die Positionierung an der Schiene kann insbesondere unmittelbar neben den an der Schiene aufgebrachten Schnittstellen erfolgen, um optimal die Kräfte an der Schiene aufnehmen zu können. Zudem kann die Vorrichtung beliebig oft an der Schiene angebracht werden, um diese im Bauraum zu halten.

Die erfindungsgemäße Vorrichtung ist mit allen im Verlegeweg einer Hochvoltdoppelschiene vorkommenden Komponenten, die frei von Kräften der Längenausdehnung oder Vibrationen sein muss, kompatibel. Das System ist auf jegliche Abmessungen der Hochvoltdoppelschiene skalierbar.

In einer Ausführungsform der Erfindung weist das elastische Kissen eine Zunge auf, die ausgeführt ist, die erste Aussparung und die zweite Aussparung voneinander abzugrenzen. Diese Zunge kann insbesondere an einer Innenwand des elastischen Kissens angebracht sein, und in einen Hohlraum innerhalb des Kissens hineinragen, um diesen Hohlraum in die erste Aussparung und in die zweite Aussparung zu unterteilen. Alternativ kann diese Zunge als Verbindungsbrücke zwischen zwei Hälften des elastischen Kissens ausgestaltet sein. Im montierten Zustand trennt die Zunge die beiden Schienen der Doppelschiene voneinander und füllt den Zwischenraum zwischen den Schienen aus.

Erfindungsgemäß ist das elastische Kissen ausgeführt, die erste Schiene sowie die zweite Schiene der Doppelschiene auf wenigstens einem Teil einer Länge der Doppelschiene vollständig zu umschließen. Dadurch wird die Schiene vollständig von dem elastischen Kissen umfasst und ragt nur vorne und hinten aus dem Kissen hinaus. Die Schiene läuft somit durch das Kissen hindurch, wobei die beiden Schienen zueinander parallel verlaufen. Insbesondere im montierten Zustand kann das Kissen zusammengepresst sein, so dass der Schlitz zum Einführen der Schienen geschlossen ist.

In einer Ausführungsform der Erfindung weist die Befestigungsschelle eine obere Platte und eine untere Platte auf, wobei die obere Platte die Einbuchtung aufweist, die ausgeführt ist, das elastische Kissen aufzunehmen, und wobei die Befestigungsschelle einen Verbindungsmechanismus aufweist, der ausgeführt ist, die obere Platte und die untere Platte miteinander zu verbinden, und dabei das elastische Kissen zwischen der oberen Platte und der unteren Platte einzuschließen. Die Befestigungsschelle kann somit zweiteilig ausgeführt sein, wobei in der zweiteiligen Ausführung das elastische Kissen zwischen den beiden Teilen der Befestigungsschelle aufgenommen wird und von diesen umschlossen wird. Die beiden Teile der Befestigungsschelle sind in dieser Ausführungsform mit einem Verbindungsmechanismus versehen, welcher die beiden Teile zusammenhält, und optional auch die Befestigungsschelle am elastischen Kissen halten kann.

In einer Ausführungsform der Erfindung ist die Befestigungsschelle ausgeführt, das elastische Kissen zu komprimieren, und dadurch die erste Schiene sowie die zweite Schiene der Doppelschiene im elastischen Kissen zu fixieren. Beispielsweise kann das elastische Kissen durch die Befestigungsschelle an das Fahrzeug gepresst werden, so dass dadurch das Kissen komprimiert wird, und die erste Schiene sowie die zweite Schiene der Doppelschiene im elastischen Kissen fixiert werden. Alternativ kann die Kompression des Kissens zwischen dem oberen Teil und dem unteren Teil der Befestigungsschelle erfolgen, sofern die Schelle zweiteilig ausgeführt ist.

In einer Ausführungsform der Erfindung weist das elastische Kissen wenigstens eine Lasche auf, und die Befestigungsschelle weist wenigstens eine Öffnung auf, wobei die Lasche an einer Außenfläche des elastischen Kissens angebracht ist, und ausgeführt ist, in die Öffnung der Befestigungsschelle einzugreifen um die Befestigungsschelle am elastischen Kissen zu fixieren. Zusätzlich oder alternativ weist das elastische Kissen an einer Außenfläche ein Außenprofil aufweist, und die Befestigungsschelle weist an einer Innenfläche ein dazu korrespondierendes Innenprofil auf, wobei das Außenprofil und das Innenprofil ausgeführt sind ineinander einzugreifen, und dadurch die Befestigungsschelle am elastischen Kissen zu fixieren. Diese Kombinationen aus Lasche am elastischen Kissen und Öffnung in der Befestigungsschelle, beziehungsweise aus Außenprofil und Innenprofil, können als der Fixierungsmechanismus verstanden werden, der die Befestigungsschelle am elastischen Kissen fixiert. Die Lasche wird dabei durch die Öffnung gezogen, wobei ein Herausrutschen durch die Form der Lasche bzw. der Öffnung vermeiden werden kann. In der alternativen Ausgestaltung, insbesondere in Kombination mit der zweiteiligen Ausführung der Befestigungsschelle, können die ineinander eingreifenden Profilierungen ein Herausrutschen des elastischen Kissens aus den beiden Teilen der Schelle verhindern.

In einer Ausführungsform der Erfindung weist das elastische Kissen zwei Laschen auf, welche an einander gegenüberliegenden Seiten des elastischen Kissens angebracht sind, und die Befestigungsschelle weist zwei Öffnungen auf, die ausgeführt sind, die zwei Laschen des elastischen Kissens aufzunehmen um die Befestigungsschelle am elastischen Kissen zu fixieren. Dadurch kann die Fixierung und die Konfektionierung deutlich verbessert werden.

In einer Ausführungsform der Erfindung weist die Befestigungsschelle wenigstens eine Sicke und/oder einen aufgestellten Rand auf, um die Stabilität der Befestigungsschelle zu erhöhen. Seitlich an der Befestigungsschelle angebrachte Sicken, insbesondere in der Biegung der Schelle, können das Bauteil versteifen. Zudem kann am oberen Bereich der Rand der Schelle aufgestellt sein.

In einer Ausführungsform der Erfindung besteht das elastische Kissen aus einem wärmeleitenden Material oder enthält ein wärmeleitendes Material, und/oder die Befestigungsschelle besteht aus einem Kunststoff oder aus Metall, vorzugsweise Edelstahl. Durch die Verwendung von zum Beispiel wärmeleitenden Kunststoffen kann die Vorrichtung zur Befestigung auch zur Kühlung des Systems, insbesondere der Schiene und angeschlossener Komponenten, genutzt werden. Der Kunststoff kann so die Wärme der Schiene aufnehmen, und sie über die Metallschelle an die Fahrzeugkarosserie ableiten. Die Befestigungsschelle, die das Kissen geometrisch umschließen kann, kann aus Metall gefertigt sein, wie zum Beispiel Edelstahl oder auch Aluminium. Alternativ kann die Befestigungsschelle aus einem Kunststoff gefertigt sein.

Gemäß einem weiteren Aspekt der Erfindung wird ein Verfahren zum Befestigen einer Doppelschiene an einem Fahrzeug mit einer Vorrichtung nach einer der vorhergehenden Ausführungsformen vorgeschlagen. Das Verfahren weist den Schritt des Bereitstellens einer Vorrichtung nach einer der vorhergehenden Ausführungsformen auf, sowie den Schritt des Einführens der ersten Schiene der Doppelschiene in die erste Aussparung und der zweiten Schiene der Doppelschiene in die zweite Aussparung des elastischen Kissens auf. Weiterhin weist das Verfahren den Schritt des Fixierens der Befestigungsschelle am elastischen Kissen mittels des Fixierungsmechanismus, und den Schritt des Befestigens der Befestigungsschelle an dem Fahrzeug mittels des Befestigungsmechanismus auf.

Somit gelten die Vorteile, die einer der oben genannten Aspekte bietet, gleichermaßen für alle anderen Aspekte und umgekehrt

Im Wesentlichen bezieht sich die Erfindung auf eine Vorrichtung zum Befestigen einer Doppelschiene an einem Fahrzeug. Die Vorrichtung weist ein elastisches Kissen und eine Befestigungsschelle auf. Das elastische Kissen weist eine erste und eine zweite Aussparung auf, um eine erste Schiene bzw. eine zweite Schiene der Doppelschiene aufzunehmen. Das elastische Kissen weist weiterhin wenigstens einen Schlitz auf um ein seitliches Einführen der beiden Schienen der Doppelschiene in die Aussparungen zu ermöglichen. Die Befestigungsschelle weist eine Einbuchtung auf um das elastische Kissen aufzunehmen, und einen Befestigungsmechanismus um die Befestigungsschelle an einem Fahrzeug zu befestigen. Weiterhin weist die Vorrichtung einen Fixierungsmechanismus auf um die Befestigungsschelle am elastischen Kissen zu fixieren.

Weitere Merkmale, Vorteile und Anwendungsmöglichkeiten der Erfindung ergeben sich aus der nachfolgenden Beschreibung von vorteilhaften Ausführungsformen und den begleitenden Figuren.

### Kurze Figurenbeschreibung

Nachfolgend wird ein vorteilhaftes Ausführungsbeispiel der Erfindung unter Bezugnahme auf die begleitenden Figuren erläutert.
Fig. 1 zeigt eine schematische Darstellung einer Vorrichtung zum Befestigen einer Doppelschiene an einem Fahrzeug gemäß einer Ausführungsform der Erfindung.
Fig. 2A und 2B zeigen schematische Darstellungen eines elastischen Kissens gemäß einer Ausführungsform der Erfindung aus verschiedenen Blickwinkeln.
Fig. 3 zeigt eine schematische Darstellung eines an einer Doppelschiene befestigten elastischen Kissens gemäß einer Ausführungsform der Erfindung.
Fig. 4A und 4B zeigen schematische Darstellungen einer Befestigungsschelle gemäß einer Ausführungsform der Erfindung aus verschiedenen Blickwinkeln.
Fig. 5A und 5B zeigen schematische Darstellungen einer Vorrichtung zum Befestigen einer Doppelschiene an einem Fahrzeug gemäß einer Ausführungsform der Erfindung aus verschiedenen Blickwinkeln.
Fig. 6A zeigt eine schematische Darstellung eines elastischen Kissens gemäß einer zweiten Ausführungsform der Erfindung.
Fig. 6B zeigt eine schematische Darstellung einer oberen Platte einer Befestigungsschelle gemäß der zweiten Ausführungsform der Erfindung.
Fig. 6C zeigt eine schematische Darstellung einer unteren Platte einer Befestigungsschelle gemäß der zweiten Ausführungsform der Erfindung.
Fig. 7A und 7B zeigen schematische Darstellungen einer Vorrichtung zum Befestigen einer Doppelschiene an einem Fahrzeug gemäß der zweiten Ausführungsform der Erfindung.
Fig. 8A und 8B zeigen schematische Darstellungen einer Vorrichtung zum Befestigen einer Doppelschiene an einem Fahrzeug gemäß einer dritten Ausführungsform der Erfindung.
Fig. 9 zeigt eine schematische Darstellung einer an einer Doppelschiene befestigten Vorrichtung zum Befestigen einer Doppelschiene an einem Fahrzeug gemäß der dritten Ausführungsform der Erfindung.
Fig. 10A zeigt eine schematische Darstellung eines elastischen Kissens gemäß einer vierten Ausführungsform der Erfindung.
Fig. 10B zeigt eine schematische Darstellung eines oberen Teils einer Befestigungsschelle gemäß der vierten Ausführungsform der Erfindung.
Fig. 10C zeigt eine schematische Darstellung eines unteren Teils einer Befestigungsschelle gemäß der vierten Ausführungsform der Erfindung.
Fig. 11A und 11B zeigen schematische Darstellungen einer Vorrichtung zum Befestigen einer Doppelschiene an einem Fahrzeug gemäß der vierten Ausführungsform der Erfindung.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

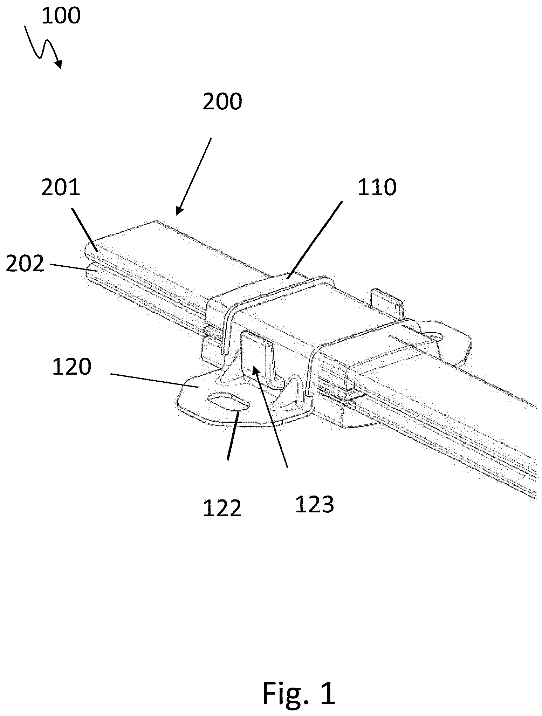

Fig. 1 zeigt eine schematische Darstellung einer Vorrichtung 100 zum Befestigen einer Doppelschiene 200 an einem Fahrzeug gemäß einer Ausführungsform der Erfindung. Die Vorrichtung weist ein elastisches Kissen 110 und eine Befestigungsschelle 120 auf. Die erste Schiene 201 und die zweite Schiene 202 der Doppelschiene 200 sind in die beiden Aussparungen 111 und 112 des elastischen Kissens eingeführt. Mittels eines Fixierungsmechanismus 123, im vorliegenden Bild eine Kombination aus Lasche 118 an dem elastischen Kissen 110 und Öffnung 128 an der Befestigungsschelle 120 ist die Befestigungsschelle 120 am elastischen Kissen 110 vorfixiert. Mittel des Befestigungsmechanismus 122 kann die Vorrichtung 100 in einem Fahrzeug befestigt werden, beispielsweise verschraubt.

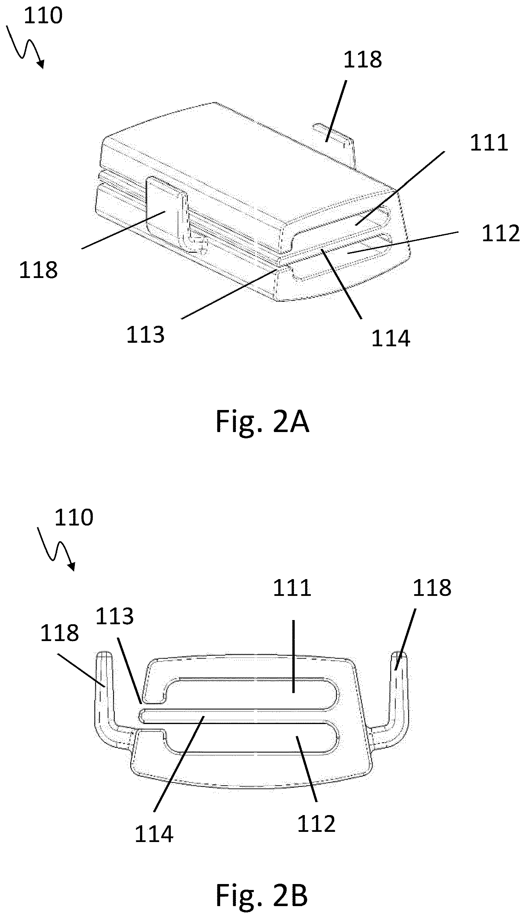

Fig. 2A und 2B zeigen schematische Darstellungen eines elastischen Kissens 110 gemäß einer Ausführungsform der Erfindung aus verschiedenen Blickwinkeln. Das elastische Kissen 110 weist eine erste Aussparung 111 und eine zweite Aussparung 112 zur Aufnahme der Doppelschiene 200 auf. Zwischen den Aussparungen verläuft eine Zunge 114, welche die Aussparungen voneinander trennt. Ein Schlitz 113 seitlich am elastischen Kissen 110 ermöglicht ein seitliches Einführen der Schienen der Doppelschiene 200 in die Aussparungen 111 und 112. Ebenfalls seitlich am elastischen Kissen 110 angebracht sind zwei Laschen 118, welche in korrespondierende Öffnungen 128 der Befestigungsschelle eingeführt werden können.

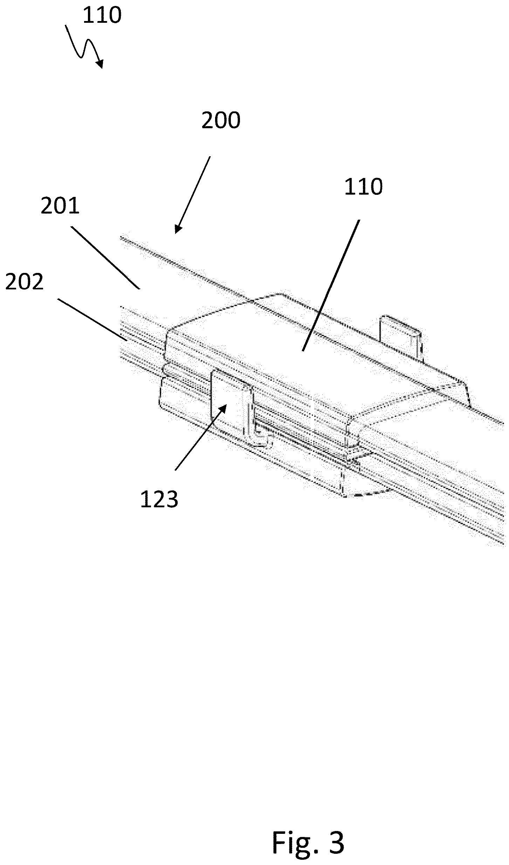

Fig. 3 zeigt eine schematische Darstellung eines an einer Doppelschiene 200 befestigten elastischen Kissens 110 gemäß einer Ausführungsform der Erfindung. Die erste Schiene 201 und die zweite Schiene 202 der Doppelschiene 200 sind in das elastische Kissen 110 eingeführt. Der Fixiermechanismus 123 ermöglicht das Vorfixieren des elastischen Kissens 110 an der Befestigungsschelle 120.

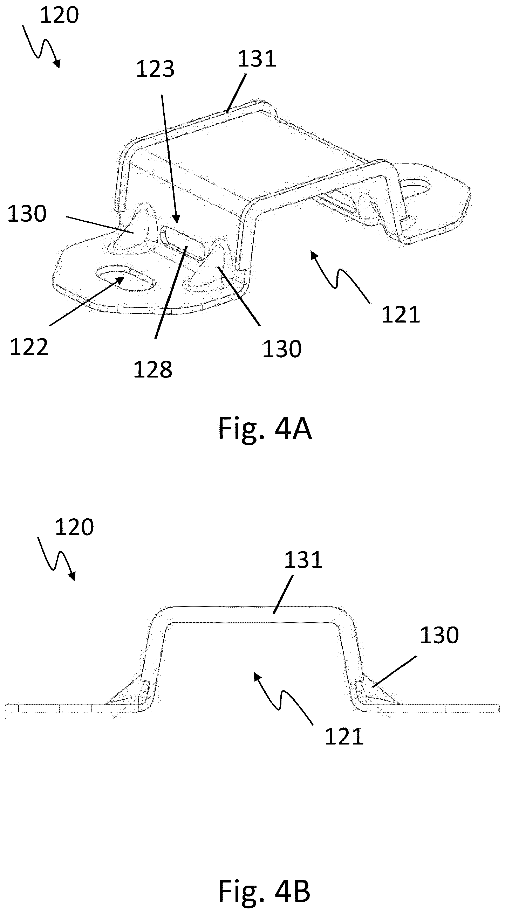

Fig. 4A und 4B zeigen schematische Darstellungen einer Befestigungsschelle 120 gemäß einer Ausführungsform der Erfindung aus verschiedenen Blickwinkeln. Die Befestigungsschelle 120 weist eine gekrümmte Form auf, so dass sie eine Einbuchtung 121 bildet, in welche das elastische Kissen 110 aufgenommen werden kann. Der Fixierungsmechanismus 123 wird hier durch eine Öffnung 128 zur Aufnahme der Lasche 118 des elastischen Kissens gebildet. Ein Langloch dient als Befestigungsmechanismus 122. An der Befestigungsschelle 120 sind Sicken 130 zur Versteifung angebracht, sowie ein aufgestellter Rand 131. In dieser Ausführungsform kann die Befestigungsschelle 120 aus einem Blech gefertigt sein, welches durch Tiefziehen, oder einem ähnlichen Umformungsprozess, in Form gebracht wurde.

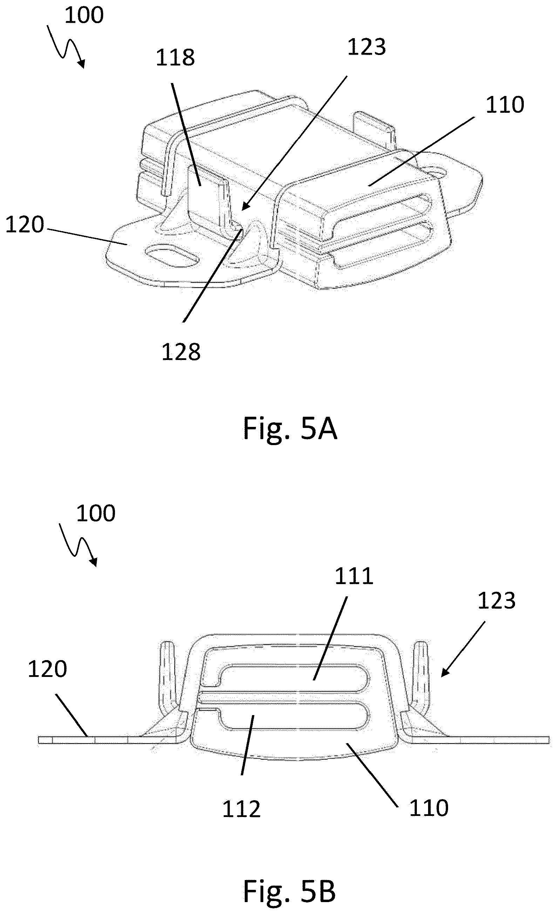

Fig. 5A und 5B zeigen schematische Darstellungen einer Vorrichtung 100 zum Befestigen einer Doppelschiene 200 an einem Fahrzeug gemäß einer Ausführungsform der Erfindung aus verschiedenen Blickwinkeln. Das elastische Kissen 110 ist in der Einbuchtung 121 der Befestigungsschelle 120 aufgenommen, und mittels der Lasche 118 in der Öffnung 128 als Fixierungsmechanismus 123 fixiert. Die erste Aussparung 111 und die zweite Aussparung 112 sind ausgeführt, die Schienen der Doppelschiene aufzunehmen.

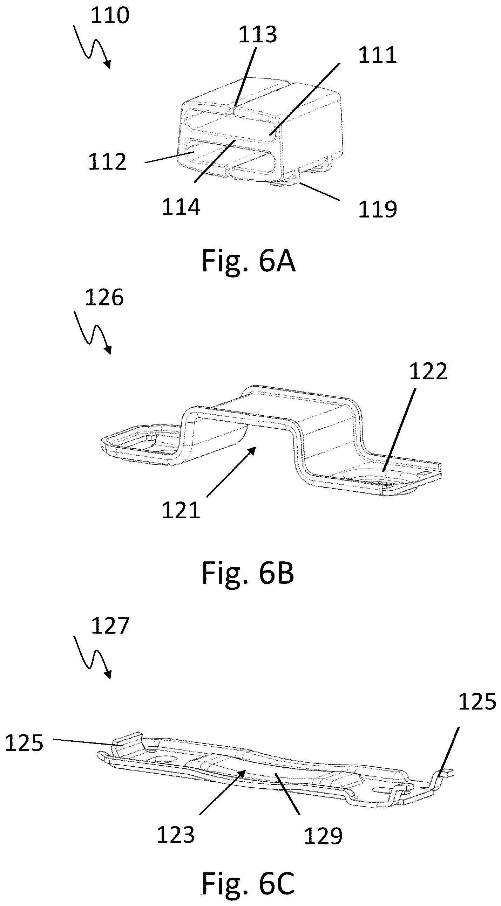

Fig. 6A zeigt eine schematische Darstellung eines elastischen Kissens 110 gemäß einer zweiten Ausführungsform der Erfindung. Die erste Aussparung 111 und die zweite Aussparung 112 des elastischen Kissens sind durch die Zunge 114 voneinander getrennt. In dieser Ausführungsform weist das elastische Kissen 110 zwei Schlitze 113 zum Einführen der Schienen der Doppelschiene 200 in die jeweilige Aussparung auf. Ein Außenprofil 119 des elastischen Kissens 110 dient in dieser Ausführungsform als Teil des Fixierungsmechanismus 123.

Fig. 6B zeigt eine schematische Darstellung einer oberen Platte 126 einer Befestigungsschelle 120 gemäß der zweiten Ausführungsform der Erfindung. Hier hat die obere Platte 126 die Einbuchtung 121 zur Aufnahme des elastischen Kissens 110. Mittels des Befestigungsmechanismus 122 kann die Vorrichtung 100 am Fahrzeug verschraubt werden.

Fig. 6C zeigt eine schematische Darstellung einer unteren Platte 127 einer Befestigungsschelle 120 gemäß der zweiten Ausführungsform der Erfindung. Die untere Platte 127 weist hier einen Verbindungsmechanismus 125 zur Verbindung mit der oberen Platte 126 auf. Hierbei kann es sich um einen Rastmechanismus handeln. Ein Innenprofil 129 als Teil des Fixierungsmechanismus 123 dient in Kombination mit dem Außenprofil 119 des elastischen Kissens 110 zur Vorfixierung des elastischen Kissens 110 in der Befestigungsschelle 120.

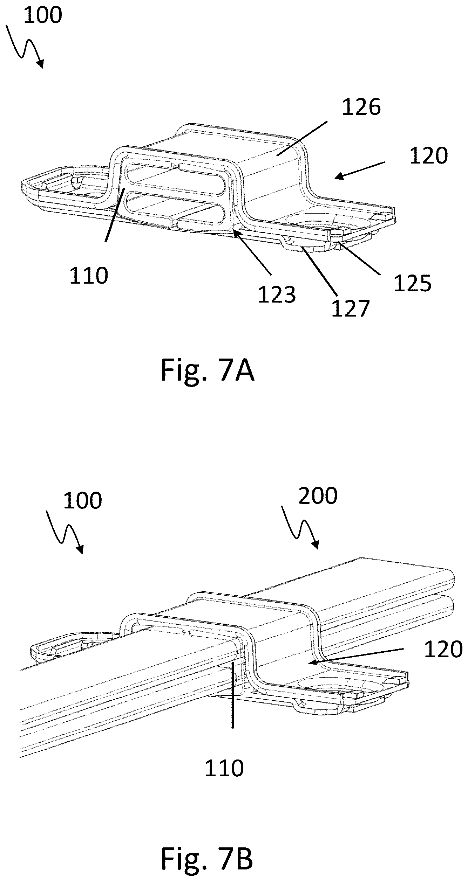

Fig. 7A und 7B zeigen schematische Darstellungen einer Vorrichtung 100 zum Befestigen einer Doppelschiene 200 an einem Fahrzeug gemäß der zweiten Ausführungsform der Erfindung. Das elastische Kissen 110 ist mittels des Fixierungsmechanismus 123 zwischen der oberen Platte 126 und der unteren Platte 127 der Befestigungsschelle 120 fixiert. Die Teile des Verbindungsmechanismus 125 verbinden die obere Platte 126 mit der unteren Platte 127. In das elastische Kissen 110 sind die beiden Schienen der Doppelschiene 200 eingeführt. In dieser Ausführungsform können die beiden Platten 126, 127 der Befestigungsschelle 120 aus einem Blech gefertigt sein, welches durch Tiefziehen, oder einem ähnlichen Umformungsprozess, in Form gebracht wurde.

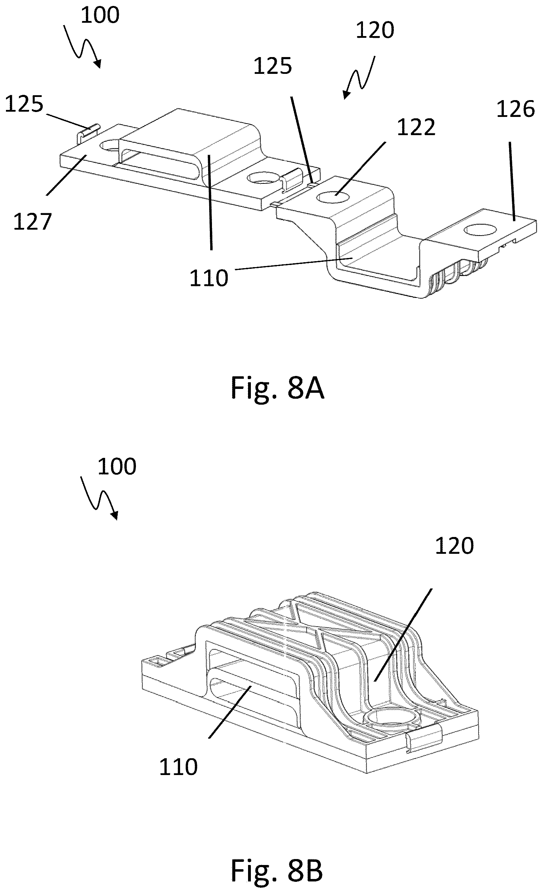

Fig. 8A und 8B zeigen schematische Darstellungen einer Vorrichtung 100 zum Befestigen einer Doppelschiene 200 an einem Fahrzeug gemäß einer dritten Ausführungsform der Erfindung. In dieser Ausführungsform kann die Vorrichtung aus einem Kunststoff bestehen. Es ist auch möglich, dass das elastische Kissen als 2K-Komponente in die Befestigungsschelle als Halter integriert ist. Die Vorrichtung 100 kann als 2K-Spritzguss ausgeführt sein, wobei die obere Platte 126 mit der unteren Platte 127 der Befestigungsschelle 120 mit einem Filmscharnier als Verbindungsmechanismus 125 verbunden sein kann. Das elastische Kissen 110 kann hier in zwei Hälften zweigeteilt sein.

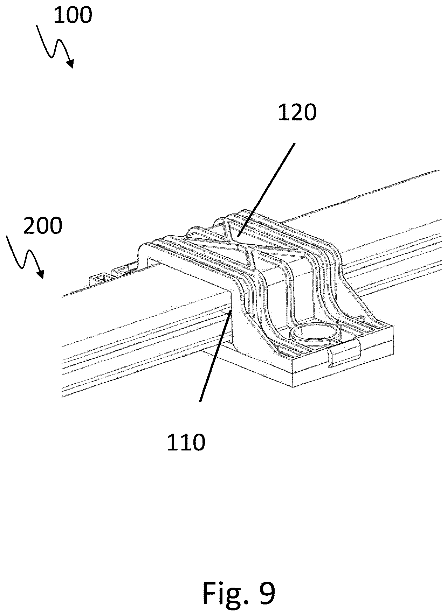

Fig. 9 zeigt eine schematische Darstellung einer an einer Doppelschiene 200 befestigten Vorrichtung 100 zum Befestigen einer Doppelschiene 200 an einem Fahrzeug gemäß der dritten Ausführungsform der Erfindung. Hierbei wurde erst die erste Schiene 201 der Doppelschiene 200 in die erste Aussparung 111 des elastischen Kissens 110 eingeführt, und dann die beiden Platten 126, 127 der Befestigungsschelle 120 zusammengeklappt, wodurch die zweite Schiene 202 der Doppelschiene 200 in der zweite Aussparung 112 des elastischen Kissens 110 positioniert wird.

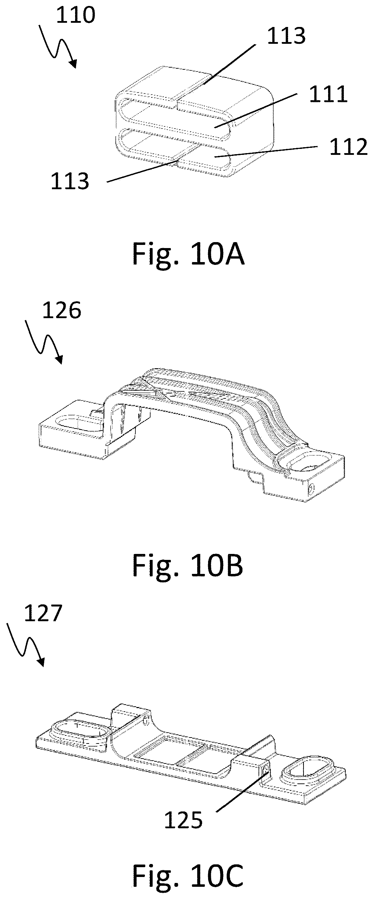

Fig. 10A zeigt eine schematische Darstellung eines elastischen Kissens 110 gemäß einer vierten Ausführungsform der Erfindung. Hierbei ist jeder Aussparung 111, 112 ein eigener schlitz 113 zugeordnet. Fig. 10B zeigt eine schematische Darstellung eines oberen Teils 126 einer Befestigungsschelle 120 gemäß der vierten Ausführungsform der Erfindung. Fig. 10C zeigt eine schematische Darstellung eines unteren Teils 127 einer Befestigungsschelle 120 gemäß der vierten Ausführungsform der Erfindung. Der Verbindungsmechanismus 125 kann hier in Form einer Verschraubung ausgeführt sein.

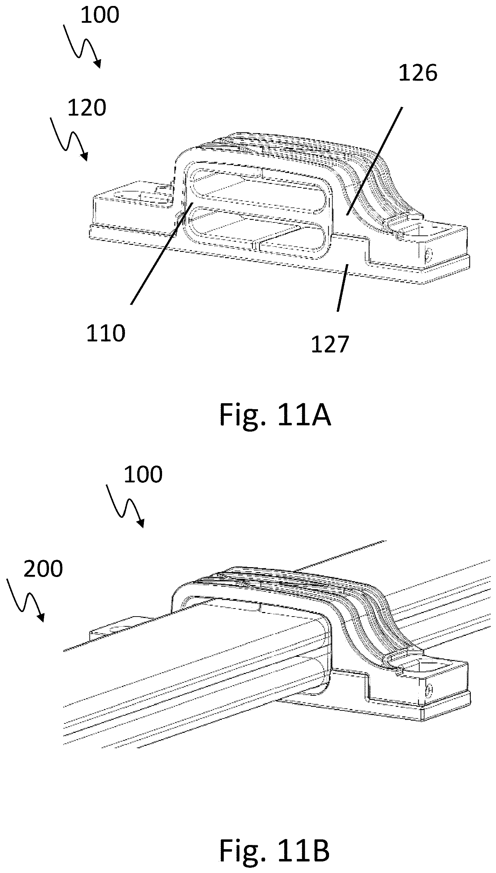

Fig. 11A und 11B zeigen schematische Darstellungen einer Vorrichtung 100 zum Befestigen einer Doppelschiene 200 an einem Fahrzeug gemäß der vierten Ausführungsform der Erfindung. Das elastische Kissen 110 ist zwischen der oberen Platte 126 und der unteren Platte 127 der Befestigungsschelle 120 aufgenommen. Die Doppelschiene 200 verläuft durch die Aussparungen des elastischen Kissens 110. In dieser Ausführungsform der Erfindung können die obere Platte 126 sowie die untere Platte 127 der Befestigungsschelle 120 beispielsweise als Aluminium-Druckguss-Teile ausgeführt sein.

Obwohl die Erfindung in den Zeichnungen und der vorstehenden Beschreibung illustriert und detailliert beschrieben wurde, sind diese Zeichnungen und Beschreibungen als illustrativ oder beispielhaft zu verstehen und nicht als einschränkend zu betrachten. Die Erfindung ist nicht auf die offenbarten Ausführungsformen beschränkt. Andere Variationen der offenbarten Ausführungsformen können von den Fachleuten, die die beanspruchte Erfindung ausführen, anhand der Zeichnungen, der Offenbarung und der abhängigen Ansprüche verstanden und ausgeführt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 100: Vorrichtung
- 110: elastisches Kissen
- 111: erste Aussparung
- 112: zweite Aussparung
- 113: Schlitz
- 114: Zunge
- 118: Lasche
- 119: Außenprofil
- 120: Befestigungsschelle
- 121: Einbuchtung
- 122: Befestigungsmechanismus
- 123: Fixierungsmechanismus
- 125: Verbindungsmechanismus
- 126: obere Platte
- 127: untere Platte
- 128: Öffnung
- 129: Innenprofil
- 130: Sicke
- 131: aufgestellter Rand
- 200: Doppelschiene
- 201: erste Schiene der Doppelschiene
- 202: zweite Schiene der Doppelschiene

## Patentansprüche

1. Vorrichtung (100) zum Befestigen einer Doppelschiene (200) an einem Fahrzeug, die Vorrichtung (100) aufweisend ein elastisches Kissen (110) und eine Befestigungsschelle (120);
wobei die Befestigungsschelle (120) eine Einbuchtung (121), die ausgeführt ist, das elastische Kissen (110) aufzunehmen, und einen Befestigungsmechanismus (122) aufweist, der ausgeführt ist, die Befestigungsschelle (120) an einem Fahrzeug zu befestigen, und
wobei die Vorrichtung (100) einen Fixierungsmechanismus (123) aufweist, der ausgeführt ist, die Befestigungsschelle (120) am elastischen Kissen (110) zu fixieren,
wobei das elastische Kissen (110) eine erste Aussparung (111), die ausgeführt ist, eine erste Schiene (201) der Doppelschiene (200) aufzunehmen, und eine zweite Aussparung (112), die ausgeführt ist, eine zweite Schiene (202) der Doppelschiene (200) aufzunehmen, und wenigstens einen Schlitz (113) aufweist, der ausgeführt ist, ein seitliches Einführen der ersten Schiene (201) der Doppelschiene (200) in die erste Aussparung (111) und ein seitliches Einführen der zweiten Schiene (202) der Doppelschiene (200) in die zweite Aussparung (112) zu ermöglichen, und wobei das elastische Kissen (110) ausgeführt ist, die erste Schiene (201) sowie die zweite Schiene (202) der Doppelschiene (200) auf einem Teil einer Länge der Doppelschiene vollständig zu umschließen, wobei dadurch die Doppelschiene (200) vollständig von dem elastischen Kissen (110) umfasst wird und vorne und hinten aus dem elastischen Kissen (110) hinaus ragt.

2. Vorrichtung (100) nach Anspruch 1, wobei das elastische Kissen (110) eine Zunge (114) aufweist, die ausgeführt ist, die erste Aussparung (111) und die zweite Aussparung (112) voneinander abzugrenzen.

3. Vorrichtung (100) nach einem der vorhergehenden Ansprüche,
wobei die Befestigungsschelle (120) eine obere Platte (126) und eine untere Platte (127) aufweist,
wobei die obere Platte (126) die Einbuchtung (121) aufweist, die ausgeführt ist, das elastische Kissen (110) aufzunehmen, und
wobei die Befestigungsschelle (120) einen Verbindungsmechanismus (125) aufweist, der ausgeführt ist, die obere Platte (126) und die untere Platte (127) miteinander zu verbinden, und dabei das elastische Kissen (110) zwischen der oberen Platte (126) und der unteren Platte (127) einzuschließen.

4. Vorrichtung (100) nach einem der vorhergehenden Ansprüche, wobei die Befestigungsschelle (120) ausgeführt ist, das elastische Kissen (110) zu komprimieren, und dadurch die erste Schiene (201) sowie die zweite Schiene (201) der Doppelschiene (200) im elastischen Kissen (110) zu fixieren.

5. Vorrichtung (100) nach einem der vorhergehenden Ansprüche,
wobei das elastische Kissen (110) wenigstens eine Lasche (118) aufweist, und wobei die Befestigungsschelle (120) wenigstens eine Öffnung (128) aufweist, wobei die Lasche (118) an einer Außenfläche des elastischen Kissens (110) angebracht ist, und ausgeführt ist, in die Öffnung (128) der Befestigungsschelle (120) einzugreifen um die Befestigungsschelle (120) am elastischen Kissen (110) zu fixieren, und/oder
wobei das elastische Kissen (110) an einer Außenfläche ein Außenprofil (119) aufweist, und wobei die Befestigungsschelle (120) an einer Innenfläche ein dazu korrespondierendes Innenprofil (129) aufweist, wobei das Außenprofil (119) und das Innenprofil (129) ausgeführt sind ineinander einzugreifen, und dadurch die Befestigungsschelle (120) am elastischen Kissen (110) zu fixieren.

6. Vorrichtung (100) nach einem der vorhergehenden Ansprüche, wobei das elastische Kissen (110) zwei Laschen (118) aufweist, welche an einander gegenüberliegenden Seiten des elastischen Kissens (110) angebracht sind, und wobei die Befestigungsschelle (120) zwei Öffnungen (119) aufweist, die ausgeführt sind, die zwei Laschen (118) des elastischen Kissens (110) aufzunehmen um die Befestigungsschelle (120) am elastischen Kissen (110) zu fixieren.

7. Vorrichtung (100) nach einem der vorhergehenden Ansprüche, wobei die Befestigungsschelle (120) wenigstens eine Sicke (130) und/oder einen aufgestellten Rand (131) aufweist, um die Stabilität der Befestigungsschelle (120) zu erhöhen.

8. Vorrichtung (100) nach einem der vorhergehenden Ansprüche,
wobei das elastische Kissen (110) aus einem wärmeleitenden Material besteht oder ein wärmeleitendes Material enthält, und/oder
wobei die Befestigungsschelle (120) aus einem Kunststoff oder aus Metall, vorzugsweise Edelstahl, besteht.

9. Verfahren zum Befestigen einer Doppelschiene (200) an einem Fahrzeug mit einer Vorrichtung (100) nach einem der Ansprüche 1 bis 8, wobei das Verfahren die Schritte aufweist:
Bereitstellen einer Vorrichtung (100) nach einem der Ansprüche 1 bis 8,
Einführen der ersten Schiene (201) der Doppelschiene (200) in die erste Aussparung (111) und der zweiten Schiene (202) der Doppelschiene (200) in die zweite Aussparung (112) des elastischen Kissens (110),
Fixieren der Befestigungsschelle (120) am elastischen Kissen (110) mittels des Fixierungsmechanismus (123), und
Befestigen der Befestigungsschelle (120) an dem Fahrzeug mittels des Befestigungsmechanismus (122).

## Claims

1. Device (100) for fastening a double rail (200) to a vehicle, the device (100) comprising an elastic cushion (110) and a fastening clamp (120);
wherein the fastening clamp (120) comprising a recess (121) configured to receive the elastic cushion (110), and a fastening mechanism (122) configured to fasten the fastening clamp (120) to a vehicle, and
wherein the device (100) comprising a fixing mechanism (123) configured to fix the fastening clamp (120) to the elastic cushion (110),
wherein the elastic cushion (110) comprises a first recess (111) configured to receive a first rail (201) of the double rail (200), and a second recess (112) configured to receive a second rail (202) of the double rail (200), and at least one slot (113) configured to allow lateral insertion of the first rail (201) into the first recess (111) and of the second rail (202) into the second recess (112), and
wherein the elastic cushion (110) is configured to completely surround the first rail (201) and the second rail (202) of the double rail (200) over part of its length, such that the double rail (200) is entirely enclosed by the elastic cushion (110) and protrudes from the front and rear of the elastic cushion (110).

2. Device (100) according to claim 1, wherein the elastic cushion (110) comprises a tongue (114) configured to separate the first recess (111) from the second recess (112).

3. Device (100) according to any of the preceding claims,
wherein the fastening clamp (120) comprises an upper plate (126) and a lower plate (127),
wherein the upper plate (126) comprising the recess (121) configured to receive the elastic cushion (110), and
wherein the fastening clamp (120) comprising a connecting mechanism (125) configured to connect the upper plate (126) and the lower plate (127), thereby enclosing the elastic cushion (110) between them.

4. Device (100) according to any of the preceding claims, wherein the fastening clamp (120) is configured to compress the elastic cushion (110), thereby fixing the first rail (201) and the second rail (202) of the double rail (200) in the elastic cushion (110).

5. Device (100) according to any of the preceding claims,
wherein the elastic cushion (110) comprises at least one tab (118), and the fastening clamp (120) comprises at least one opening (128), the tab (118) being arranged on an outer surface of the elastic cushion (110) and configured to engage the opening (128) to fix the fastening clamp (120) to the elastic cushion (110), and/or
wherein the elastic cushion (110) comprises an outer profile (119), and the fastening clamp (120) comprises a corresponding inner profile (129), the outer profile (119) and the inner profile (129) being configured to interlock, thereby fixing the fastening clamp (120) to the elastic cushion (110).

6. Device (100) according to any of the preceding claims, wherein the elastic cushion (110) comprises two tabs (118) arranged on opposite sides of the elastic cushion (110), and the fastening clamp (120) comprises two openings (128) configured to receive the two tabs (118) in order to fix the fastening clamp (120) to the elastic cushion (110).

7. Device (100) according to any of the preceding claims, wherein the fastening clamp (120) comprises at least one bead (130) and/or an upright edge (131) to increase its stability.

8. Device (100) according to any of the preceding claims,
wherein the elastic cushion (110) consists of or contains a heat-conductive material, and/or
wherein the fastening clamp (120) consists of a plastic material or a metal, preferably stainless steel.

9. Method for fastening a double rail (200) to a vehicle using a device (100) according to any of claims 1 to 8, **characterised in that** the method comprises the steps of:
providing a device (100) according to any of claims 1 to 8;
inserting the first rail (201) of the double rail (200) into the first recess (111) and the second rail (202) into the second recess (112) of the elastic cushion (110);
fixing the fastening clamp (120) to the elastic cushion (110) using the fixing mechanism (123);
fastening the fastening clamp (120) to the vehicle using the fastening mechanism (122).

## Revendications

1. Dispositif (100) destiné à fixer un double rail (200) sur un véhicule, le dispositif (100) comprenant un coussin élastique (110) et un collier de fixation (120);
le collier de fixation (120) comportant un renfoncement (121) configuré pour recevoir le coussin élastique (110), et un mécanisme de fixation (122) configuré pour fixer le collier de fixation (120) sur un véhicule, et
le dispositif (100) comportant un mécanisme de fixation (123) configuré pour fixer le collier de fixation (120) sur le coussin élastique (110),
le coussin élastique (110) comporte une première cavité (111) configurée pour recevoir un premier rail (201) du double rail (200), et une seconde cavité (112) configurée pour recevoir un second rail (202) du double rail (200), et au moins une fente (113) configurée pour permettre une insertion latérale du premier rail (201) dans la première cavité (111) et du second rail (202) dans la seconde cavité (112), et
le coussin élastique (110) est configuré pour entourer complètement le premier rail (201) et le second rail (202) du double rail (200) sur une partie de sa longueur, le double rail (200) étant ainsi entièrement enveloppé par le coussin élastique (110) et dépassant à l'avant et à l'arrière du coussin élastique (110).

2. Dispositif (100) selon la revendication 1, le coussin élastique (110) comportant une languette (114) configurée pour séparer la première cavité (111) de la seconde cavité (112).

3. Dispositif (100) selon l'une quelconque des revendications précédentes,
le collier de fixation (120) comportant une plaque supérieure (126) et une plaque inférieure (127),
la plaque supérieure (126) comportant le renfoncement (121) configuré pour recevoir le coussin élastique (110), et
le collier de fixation (120) comportant un mécanisme de liaison (125) configuré pour relier la plaque supérieure (126) et la plaque inférieure (127), en emprisonnant le coussin élastique (110) entre elles.

4. Dispositif (100) selon l'une des revendications précédentes, le collier de fixation (120) étant configuré pour comprimer le coussin élastique (110), fixant ainsi le premier rail (201) et le second rail (202) du double rail (200) dans le coussin élastique (110).

5. Dispositif (100) selon l'une des revendications précédentes,
le coussin élastique (110) comportant au moins un ergot (118), et le collier de fixation (120) comportant au moins une ouverture (128), l'ergot (118) étant disposé sur une surface extérieure du coussin élastique (110) et configuré pour s'engager dans l'ouverture (128) afin de fixer le collier de fixation (120) sur le coussin élastique (110), et/ou
le coussin élastique (110) comportant un profil extérieur (119), et le collier de fixation (120) comportant un profil intérieur (129) correspondant, les profils (119, 129) étant configurés pour s'engrener afin de fixer le collier de fixation (120) sur le coussin élastique (110).

6. Dispositif (100) selon l'une quelconque des revendications précédentes, le coussin élastique (110) comportant deux ergots (118) disposés sur des côtés opposés du coussin élastique (110), et le collier de fixation (120) comportant deux ouvertures (128) configurées pour recevoir les deux ergots (118) afin de fixer le collier de fixation (120) sur le coussin élastique (110).

7. Dispositif (100) selon l'une quelconque des revendications précédentes, le collier de fixation (120) comportant au moins une nervure (130) et/ou un rebord relevé (131) pour augmenter sa stabilité.

8. Dispositif (100) selon l'une quelconque des revendications précédentes,
le coussin élastique (110) étant composé ou comprenant un matériau conducteur de chaleur, et/ou
le collier de fixation (120) étant constitué d'un plastique ou d'un métal, de préférence en acier inoxydable.

9. Procédé pour fixer un double rail (200) sur un véhicule à l'aide d'un dispositif (100) selon les revendications 1 à 8, le procédé comporte les étapes suivantes:
fournir un dispositif (100) selon les revendications 1 à 8;
insérer le premier rail (201) dans la première cavité (111) et le second rail (202) dans la seconde cavité (112) du coussin élastique (110);
fixer le collier de fixation (120) sur le coussin élastique (110) à l'aide du mécanisme de fixation (123);
fixer le collier de fixation (120) sur le véhicule à l'aide du mécanisme de fixation (122).
